# EUROPÄISCHE PATENTSCHRIFT

(11) **EP 1 857 774 B1**
(45) Veröffentlichungstag und Bekanntmachung des Hinweises auf die Patenterteilung: **31.12.2008**
(21) Anmeldenummer: 07005526.4
(22) Anmeldetag: 17.03.2007
(51) Int. Cl.: G01B 11/275

(54) **Verfahren und Vorrichtung zur Radschlag-Kompensation bei der Achsvermessung**
Method and device for wheel run-out compensation in axis measurement
Procédé et dispositif de compensation de l'excentricité d'une roue lors de la mesure d'axe

(30) Priorität: 15.05.2006 DE 102006022935
(43) Veröffentlichungstag der Anmeldung: 21.11.2007
(73) Patentinhaber: Otto Nussbaum GmbH & Co. KG, 77694 Kehl-Bodersweier (DE)
(72) Erfinder: Nussbaum, Hans, 77694 Kehl-Bodersweiter (DE)
(74) Vertreter: Brommer, Hans Joachim

(56) Entgegenhaltungen:
- EP-A- 0 895 056
- WO-A-01/23834
- WO-A-02/095324
- FR-A- 2 808 082

## Beschreibung

Die Erfindung betrifft ein Verfahren zur Radschlag-Kompensation mit den Merkmalen des Oberbegriffes von Patentanspruch 1 und eine Vorrichtung zur Durchführung dieses Verfahrens.

Die richtige Einstellung der Räder, insbesondere Spur, Sturz und Spreizung sind von entscheidender Bedeutung für die Sicherheit, das Lenkverhalten und den Reifenverschleiß. Daher ist es notwendig, die Fahrzeugachsen von Zeit zu Zeit zu vermessen und nachzujustieren.

Das derzeit am häufigsten angewandte Verfahren der Achsvermessung arbeitet mit einem Messkopf, der über einen Adapter an dem zu vermessenden Rad montiert wird, wobei die Felge als Basis fungiert, an der sich der Adapter über 3 Beine abstützt.

Moderner ist die berührungslose Achsvermessung. Sie arbeitet mit Kameras, die die Bewegung charakteristischer Markierungen auf der Felge oder auf dem Reifen erfassen. Hieraus können aufgrund mathematischer Beziehungen die Daten der Radachse bzw. der Lenkgeometrie ermittelt werden.

Bei allen Achsmessverfahren besteht das Risiko, dass die Felge und/oder der Reifen einen Rundlauffehler, insbesondere einen seitlichen Schlag hat, so dass die gemessene Rotationsebene des Rades nicht mit der tatsächlichen Rotationsebene übereinstimmt. Deshalb ist es notwendig, eine sogenannte Radschlag-Kompensation durchzuführen. Dabei wird das Rad um einen bestimmten Drehwinkel gedreht und die dabei eventuell eintretende Lageänderung der Rotationsebene in Abhängigkeit vom Drehwinkel erfasst, so dass die gemessenen Spur- und Sturzwerte korrigiert werden können.

Meist erfolgt die Achsvermessung auf einer Hebebühne, wobei die zu vermessenden Räder auf einem Drehteller und/oder Schiebeplatten stehen. Das Fahrzeug wird dann mittels eines Radfreihebers oder Achshebers angehoben und die Räder werden von Hand gedreht.

Daneben ist die sogenannte schiebende Kompensation bekannt. Dabei muss das Fahrzeug ein Stück von Hand vorwärts und/oder rückwärts verschoben werden.

Schließlich ist es durch die DE 20 303 599 der Anmelderin bekannt geworden, die zu vermessenden Räder in jeweils einem Fahrgestell mit zwei Fahrrollen zu lagern, so dass die Räder motorisch in Drehung versetzt werden können. Dadurch entfällt das manuelle Verdrehen der Fahrzeugräder oder gar das Verschieben des gesamten Fahrzeuges und die Messung wird vereinfacht und beschleunigt.

Ein berührungsloses Verfahren zur Radschlag-Kompensation mit den Merkmalen des Oberbegriffes von Patentanspruch 1 ist durch die FR-A-2808082 bekannt geworden. Dabei wird das Fahrzeug durch seinen eigenen Antrieb zwischen zwei Messpositionen verfahren, während die Schiebeplatten auf der Hebebühne arretiert sind.

Des Weiteren ist durch die EP-A-0895056 eine Vorrichtung zur berührungslosen Achsvermessung bekannt, bei der an einer Hebebühne zumindest eine linksseitige und eine rechtsseitige Schiebeplatte angeordnet ist, deren Verschiebeweg durch Wegsensoren messbar ist und auf denen je zwei Videokameras montiert sind.

Der folgenden Erfindung liegt nun die Aufgabe zugrunde, die Radschlag-Kompensation weiter zu vereinfachen, insbesondere für den Fall, dass sie mit einer berührungslosen Achsvermessung kombiniert werden soll. Nicht zuletzt soll sich die Erfindung durch hohe Genauigkeit, Betriebssicherheit und günstige Kosten auszeichnen.

Diese Aufgabe wird erfindungsgemäß durch die Merkmale des Patentansprüche 1 und 5 gelöst.

Die Erfindung geht von der Erkenntnis aus, dass die zur Radschlag-Kompensation erforderliche Erfassung des Drehwinkels derzeit noch problematisch ist, wenn man auf einen auf das Rad aufsetzbaren Messkopf oder magnetische Markierungspunkte verzichten möchte. Deshalb schlägt die Erfindung im Prinzip vor, den Drehwinkel des Rades nicht wie bisher direkt zu ermitteln, sondern aus dem Abrollweg des Rades einerseits und dem zugehörigen effektiven Abrollradius andererseits mit Hilfe der bekannten Kreisgleichung Umfang = 2 π x Radius zu berechnen. Wesentlich dabei ist allerdings, dass nicht der theoretische Radius des Reifens verwendet wird, sondern der effektive Abrollradius, bei dem die Deformation des Reifens durch das Fahrzeuggewicht berücksichtigt wird. Man kann dann aus dem in Umfangsrichtung zurückgelegten Abrollweg des Rades einerseits und dem effektiven Abrollradius andererseits sehr genau den zugehörigen Drehwinkel des Rades errechnen.

Dabei wird der Abrollweg des Rades über den Schiebeweg der Schiebeplatte ermittelt, weil hierfür einfache Weg-Messinstrumente zur Verfügung stehen. Dabei liegt es im Rahmen der Erfindung, nicht nur den Anfang und das Ende des Schiebeweges zu messen, sondern fortlaufende Wegmessungen durchzuführen und bei mehreren gemessenen Wegpunkten jeweils die Orientierung des Rades zu messen, weil dadurch ein eventueller Radschlag erheblich genauer erfasst werden kann.

Der zur Berechnung des Drehwinkels noch notwendige effektive Abrollradius des Rades wird vorzugsweise berührungslos aus Kamera-Bilddaten des Rades während seiner Drehung ermittelt. Dabei können mehre ausgezeichnete Punkte auf der Felge erfasst und aus deren kreisbogenförmiger Verlagerung die genauen Koordinaten der Drehachse ermittelt werden. Dies ist deutlich genauer, als die Bezugnahme auf den scheinbaren Mittelpunkt der Felge, denn die dort angebrachten Zierkappen sitzen nicht immer exakt im Zentrum.

Die beschriebene Erfassung des Radmittelpunktes durch Kamera-Bilddaten reicht aus, um den effektiven Abrollradius zu ermitteln, weil die Kamera üblicherweise in ihrer Höhenskala auf die gleiche Bezugsebene geeicht ist, auf der auch das Rad abrollt, also auf das Niveau der Schiebeplatten. Dadurch resultiert aus der Höhe des Radmittelpunktes unmittelbar der effektive Abrollradius.

Zur weiteren Vereinfachung und Beschleunigung empfiehlt es sich, die Radschlagkompensation in das Messprogramm der Achsvermessung zu integrieren. Man braucht dann lediglich durch Knopfdruck die Verschiebung der Schiebeplatten auszulösen, worauf automatisch die Achsvermessung wie auch die Radschlagkompensation erfolgt.

Für die berührungslose Achsvermessung und Radschlag-Kompensation empfiehlt es sich, dass in an sich bekannter Weise mittels Beamer ein Streifenmuster auf dem Rad erzeugt wird, dieses Streifenmuster und seine während der Raddrehung sich ergebende Positionsänderung im Raum durch eine Kamera erfasst und durch einen Rechner ausgewertet wird.

Weitere Merkmale und Vorteile der Erfindung ergeben sich aus der nachfolgenden Beschreibung eines Ausführungsbeispieles und aus der Zeichnung; dabei zeigt
- Figur 1: eine Draufsicht auf eine Hebebühne mit Kameras zur berührungslosen Schlagkompensation bei der Achsvermessung von oben gesehen;
- Figur 2: einen Fahrzeugausschnitt auf der Hebebühne in Seitenansicht;
- Figur 3: den gleichen Ausschnitt wie Figur 2 nach Verfahren der Schiebeplatten in Vorwärtsrichtung und
- Figur 4: den gleichen Ausschnitt wie Figur 2 nach Verfahren der Schiebeplatten in die Rückwärtsrichtung.

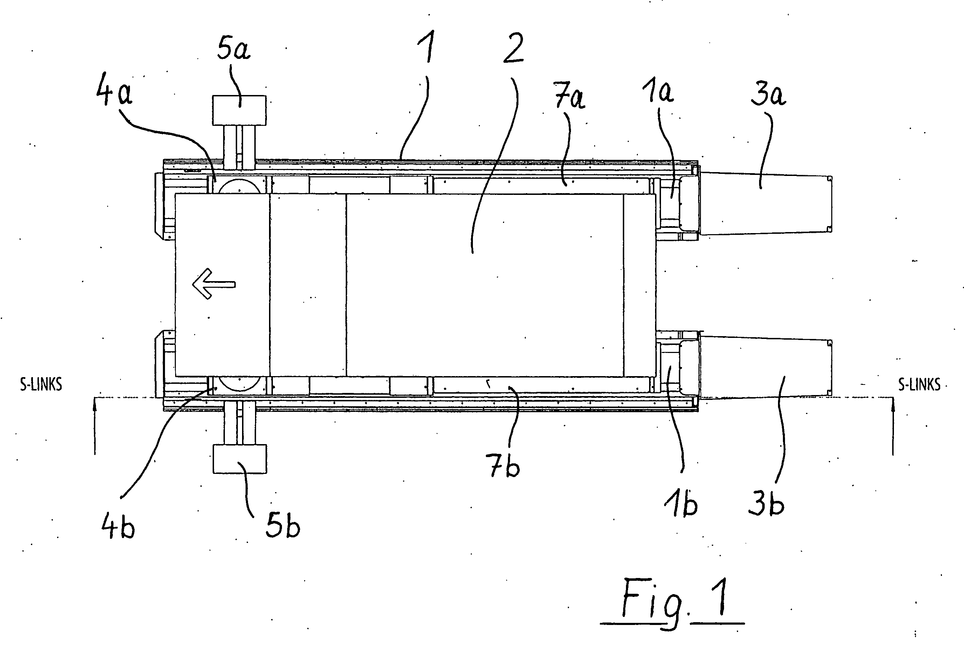

In Figur 1 erkennt man eine Hebebühne 1, die aus zwei parallelen Fahrschienen 1 a und 1 b besteht, die aber genausogut anders aufgebaut sein könnte, etwa als Arbeitsplattform oder dergleichen. Auf der Hebebühne 1 steht ein Fahrzeug 2, das über übliche Auffahrrampen 3a und 3b auf die Fahrschienen gefahren worden ist, derart, dass seine Vorderräder auf den Schiebeplatten 4a, 4b zum Stehen gekommen sind. Diese Schiebeplatten sind horizontal in allen Richtungen verschiebbar, vorzugsweise auch um ihre Vertikalachse drehbar gelagert, damit die Fahrzeugräder absolut spannungsfrei auf diesen Schiebeplatten stehen und dieser spannungsfreie Zustand auch während des Verfahrens der Schiebeplatten beibehalten wird. Zu dem gleichen Zweck stehen auch die Hinterräder des Fahrzeuges auf entsprechenden Schiebeplatten 7a bzw. 7b.

Zweckmäßig sind die Schiebeplatten mit einer Selbstverriegelung ausgerüstet, damit sie in unbenutztem Zustand nicht beim Betreten von Bedienungspersonal seitlich wegrutschen. Diese Selbstverriegelung wird automatisch aufgehoben, wenn die Hebebühne durch ein Fahrzeug belegt ist.

Beidseits der Vorderräder befinden sich Roboter 5a und 5b, jeweils bestehend aus einem Beamer und einer Kamera. Der Beamer wirft auf das ihm zugeordnete Rad ein Streifenmuster. Dieses Streifenmuster wird von der Kamera erfasst und aus den Bilddaten ermittelt ein Rechner in sich bekannter Weise, insbesondere durch die sogenannte Colour-coded Triangulation, zumindest Sturz und Spur des Rades. Diese Messwerte müssen jedoch mehr oder weniger korrigiert werden, wenn das Rad einen Schlag hat, das heißt, nicht ideal rund ist, sondern beispielsweise eine lokale Ausbeulung hat.

Hier setzt die vorliegende Erfindung an, indem die Räder mittels der Schiebeplatten 4a und 4b verdreht, der horizontale Verfahrweg der Schiebeplatten gemessen und gleichzeitig - vorzugsweise mittels der Kamera in den Robotern 5a und 5b auch der effektive Abrollradius des durch das Fahrzeuggewicht etwas plattgedrückten Reifens gemessen wird.

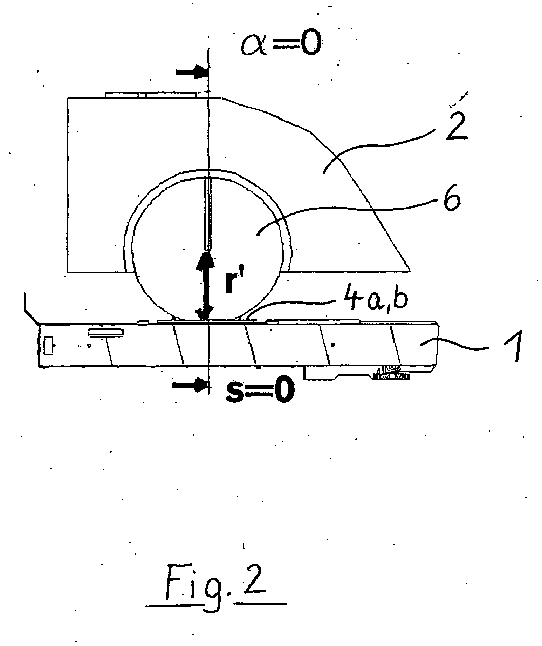

Der effektive Abrollradius ist in Figur 2 mit r' bezeichnet. Zu seiner Bestimmung genügt es, wenn die Kamera die Höhe des Drehpunktes des Rades 6 über der Schiebeplatte 4a bzw. 4b misst, denn die z-Achse der Kamera ist mit ihrem Nullpunkt auf das Niveau der Schiebeplatten eingestellt.

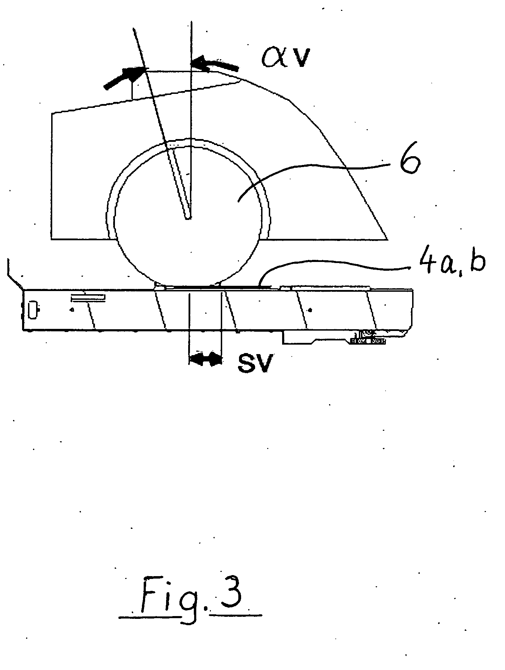

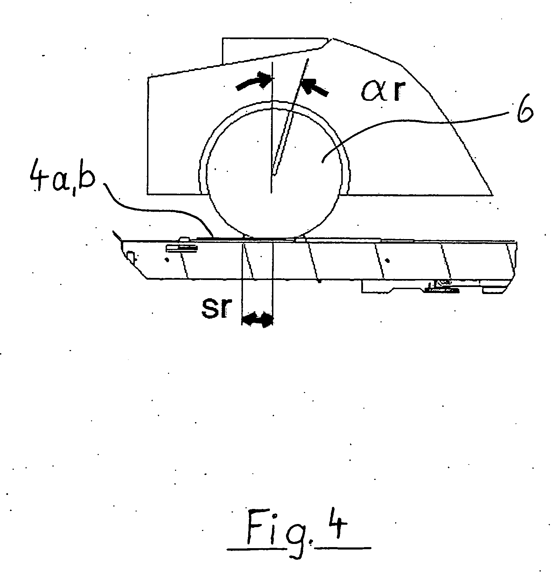

Die Höhenmessung der Rad-Drehachse erfolgt zweckmäßig während der Raddrehung. Dazu fahren die Schiebeplatten - siehe Figur 3 und 4 - einmal in Vorwärtsrichtung, einmal in Rückwärtsrichtung, so dass die Kamera um die Raddrehachse herumlaufende Kreisbogenabschnitte aufnimmt. Aus deren Position lässt sich der Drehpunkt des Rades zuverlässig errechnen und damit auch der effektive Abrollradius r'.

Des Weiteren wird der horizontale Verfahrweg der Schiebeplatte gemessen. Dies kann theoretisch ebenfalls über die Kameras erfolgen, meist aber durch direkte lineare Wegmessung an den Schiebeplatten selbst. Dadurch erhält man für die Vorwärtsbewegung der Schiebeplatte einen Messwert sv,für die Rückwärtsbewegung einen Messwert sr für den jeweils zurückgelegten Abrollweg des Rades 6.

Aus den Messwerten für r' und sv lässt sich dann der Verdrehwinkel αv gemäß der Gleichung αv = 360/2πr' • sv bestimmen. Gleichermaßen wird für die Rückwärtsdrehung der Drehwinkel αr berechnet. Für die gesamte Schlagkompensation werden neben dem Startpunkt (s=0 gemäß Figur 2) die beiden in Figur 3 und Figur 4 gezeigten Stellungen angefahren, bei denen der Drehwinkel jeweils in der Größenordnung von etwa 20° liegt. Die bei diesen Positionen gemessene Spur- und Sturzwinkel werden anschließend in an sich bekannter Weise in eine Schlagkompensations-Rechnung eingesetzt, um daraus die korrigierten Spur- und Sturzwerte zu erhalten.

Die Erfindung gestattet somit die ideale Verknüpfung einer berührungslosen Achsvermessung mit einer ebenfalls berührungslosen Radschlagkompensation, ohne dass Messköpfe, Markierungspunkte oder dergleichen auf das Rad aufgesetzt werden müssen.

## Patentansprüche

1. Verfahren zu Radschlag-Kompensation bei der Achsvermessung eines Kraftfahrzeuges (2) unter Drehung des zu vermessenden Rades (6) durch Abrollen auf einer unter dem Rad (6) verfahrbaren Schiebeplatte (4a, 4b), wobei der Abrollweg (sv, sr) des Rades (6) einerseits und der effektive Abrollradius (r') des Rades (6) andererseits gemessen und hieraus der Drehwinkel (αv, αr) des Rades ermittelt wird,
**dadurch gekennzeichnet, dass** die Schiebeplatte (4a, 4b) durch einen Antrieb verfahren und der Abrollweg des Rades (6) aus dem Schiebeweg (sv, sr) der Schiebeplatte ermittelt wird.

2. Verfahren nach Anspruch 1,
**dadurch gekennzeichnet,**
**dass** gleichzeitig mit der Messung des Abrollweges auch Spur und Sturz des Rades (6) ermittelt werden.

3. Verfahren nach Anspruch 1,
**dadurch gekennzeichnet,**
**dass** zur Messung des effektiven Abrollradius (r') der Radmittelpunkt berührungslos aus Kamera-Bilddaten des Rades während seiner Drehung ermittelt wird.

4. Verfahren nach Anspruch 1,
**dadurch gekennzeichnet,**
**dass** die Messung von Spur und Sturz des Rades (6) berührungslos in der Weise erfolgt, dass mittels Beamer ein Streifenmuster auf dem Rad erzeugt, dieses Streifenmuster und seine während der Raddrehung sich ergebende Lageänderung im Raum durch eine Kamera erfasst und durch einen Rechner ausgewertet wird.

5. Vorrichtung zur Durchführung des Verfahrens nach einem der vorhergehenden Ansprüche, wobei an einer Hebebühne (1) zumindest eine linksseitige und eine rechtsseitige Schiebeplatte (4a, 4b) angeordnet ist, die durch einen Antrieb unter dem Rad (6) eines Fahrzeugs (2) verfahrbar sind und deren Verschiebeweg (sv, sr) durch Wegsensoren messbar ist, wobei der gemessene Verschiebeweg (sv, sr) zur Ermittlung des Abrollweges des Rades (6) dient, wobei die Hebebühne (1) mit verstellbar zu ihr gelagerten Beamern und Kameras ausgestattet ist, um den effektiven Abrollradius des Rades zu messen, und Mittel vorgesehen sind zur Berechnung des Drehwinkels (αv, αr) des Rades (6) aus dem Abrollweg (sv, sr) des Rades (6) und dem effektiven Abrollradius (r').

6. Vorrichtung nach Anspruch 5,
**dadurch gekennzeichnet,**
**dass** das Verfahren der Schiebeplatten (4a, 4b) hydraulisch erfolgt.

7. Vorrichtung nach Anspruch 5,
**dadurch gekennzeichnet,**
**dass** das Verfahren der Schiebeplatten gleichzeitig in entgegengesetzter Richtung erfolgt.

## Claims

1. Method of wheel run-out compensation in axle measurement of a motor vehicle (2) by rotation of the wheel (6) to be measured by travelling on a slide plate (4a, 4b) which is movable below the wheel (6), wherein the travel path (sv, sr) of the wheel (6) on the one hand and the effective travel radius (r') of the wheel (6) on the other hand is measured and the angle of rotation (αv, αr) of the wheel is determined wherefrom, **characterised in that** the slide plate (4a, 4b) is moved by a drive and the travel path of the wheel (6) is determined from the displacement path (sv, sr) of the slide plate.

2. Method as claimed in Claim 1, **characterised in that** the track and camber of the wheel (6) are also determined simultaneously with the measurement of the travel path.

3. Method as claimed in Claim 1, **characterised in that** for measurement of the effective travel radius (r') the wheel centre point is determined contactlessly from camera1 image data of the wheel during rotation thereof.

4. Method as claimed in Claim 1, **characterised in that** the measurement of track and camber of the wheel (6) takes place contactlessly in such a way that by means of beamers a striped pattern is produced on the wheel, this striped pattern and the change of position thereof in space during the rotation of the wheel is detected by a camera and evaluated by a computer.

5. Apparatus for carrying out the method as claimed in any one of the preceding claims, wherein there is disposed on a lifting platform (1) at least one left-hand and one right-hand slide plate (4a, 4b) which are movable by a drive under the wheel (6) of a motor vehicle(2) and of which the displacement path (sv, sr) can be measured by path sensors, wherein the measured displacement path (sv, sr) serves for determination of the travel path of the wheel (6), wherein the lifting platform (1) is equipped with beamers and cameras which are mounted adjustably therewith in order to measure the effective travel radius of the wheel, and means are provided for calculation of the angle of rotation (αv, αr) of the wheel (6) from the travel path (sv, sr) of the wheel (6) and the effective travel radius (r').

6. Apparatus as claimed in Claim 5, **characterised in that** the movement of the slide plates (4a, 4b) takes place hydraulically.

7. Apparatus as claimed in Claim 5, **characterised in that** the movement of the slide plates takes place simultaneously in the opposite direction.

## Revendications

1. Procédé de compensation de l'excentricité d'une roue lors de l'ajustage des essieux d'un véhicule automobile (2), tandis que la roue (6) à ajuster tourne en roulant sur une plaque coulissante (4a, 4b) pouvant être déplacée en dessous de la roue (6), sachant qu'on mesure d'une part la course de roulement (sv, sr) de la roue (6) et d'autre part le rayon de roulement effectif (r') de la roue (6), à partir de quoi l'on détermine l'angle de rotation (αv, αr) de la roue,
**caractérisé en ce que** la plaque coulissante (4a, 4b) peut être déplacée par un entraînement, et la course de roulement de la roue (6) est déterminée à partir de la course de coulissement (sv, sr) de la plaque coulissante.

2. Procédé selon la revendication 1, **caractérisé en ce que,** en même temps que la mesure de la course de roulement, on détermine également le pincement et le carrossage de la roue (6).

3. Procédé selon la revendication 1, **caractérisé en ce que,** pour mesurer le rayon de roulement effectif (r'), on détermine sans contact le centre géométrique de la roue pendant sa rotation au moyen de données d'image de la roue fournies par une caméra.

4. Procédé selon la revendication 1, **caractérisé en ce que** la mesure du pincement et du carrossage de la roue (6) s'effectue sans contact de telle sorte qu'on produit au moyen d'un vidéoprojecteur une mire à barres sur la roue, et que cette mire et sa modification de position résultant de la rotation de la roue sont enregistrées par une caméra et interprétées par un calculateur.

5. Dispositif pour la mise en oeuvre du procédé selon l'une des revendications précédentes, sachant qu'au moins une plaque coulissante (4a, 4b) de gauche et une plaque coulissante (4a, 4b) de droite sont disposées sur un pont élévateur (1), plaques qui peuvent être déplacées par un entraînement sous la roue (6) d'un véhicule (2) et dont la course de coulissement (sv, sr) peut être mesurée par des capteurs de déplacement, sachant que la course de coulissement mesurée (sv, sr) sert à déterminer la course de roulement de la roue (6), sachant que le pont élévateur (1) est équipé de vidéoprojecteurs et de caméras montés à déplacement par rapport à lui afin de mesurer le rayon de roulement effectif de la roue, et que des moyens sont prévus pour calculer l'angle de rotation (αv, αr) de la roue (6) à partir de la course de roulement (sv, sr) de la roue (6) et du rayon de roulement effectif (r').

6. Dispositif selon la revendication 5, **caractérisé en ce que** le déplacement des plaques coulissantes (4a, 4b) s'effectue hydrauliquement.

7. Dispositif selon la revendication 5, **caractérisé en ce que** le déplacement des plaques coulissantes (4a, 4b) s'effectue simultanément dans des directions opposées.
